# EUROPEAN PATENT APPLICATION

(11) **EP 4 181 098 A1**
(43) Date of publication of application: **17.05.2023**
(21) Application number: 22179648.5
(22) Date of filing: 17.06.2022
(51) Int. Cl.: G08C 17/00

(54) **COMMUNICATION TERMINAL AND PROGRAMMABLE DISPLAY DEVICE**

(30) Priority: 10.11.2021 JP 2021183642
(71) Applicant: Schneider Electric Japan Holdings Ltd., Tokyo (JP)
(72) Inventor: NAGAYA, Michihide, OSAKA, 5410041 (JP)
(74) Representative: Plasseraud IP

(57) **Abstract**

A communication terminal includes: a network communication section configured to communicate with a device that possesses a target to be accessed and access information acquired by accessing the target; a setting section configured to set, for a transmission means that is used to carry out transmission by communication carried out by a program for exchanging messages, (i) specifying information for specifying the target and (ii) an action that the device is caused to execute with respect to the access information, the specifying information and the action being set by an operation of a user so as to be associated with each other; and an execution control section configured to cause the network communication section to send the transmission means to the device, and cause the device to execute, with respect to the access information on the target that is specified by the specifying information having been set for the transmission means, the action having been set for the transmission means.

## Description

### Technical Field

The present invention relates to a communication terminal and a programmable display device capable of communicating with the communication terminal.

### Background Art

Patent Literature 1 discloses a device control device for instructing a controlled device on details of control of the controlled device, the details having been generated by using a message application to operate a control object. A control image that is used as the control object is prepared for carrying out a predetermined operation such as changing the temperature of an air conditioner. The control image is issued by a cloud server.

### Citation List

### [Patent Literature]

[Patent Literature 1]
Japanese Patent Application Publication, Tokukai, No. 2020-42561

### Summary of Invention

### Technical Problem

In a factory or the like, a field operator monitors operation states of various devices and operates the devices. Examples of application of such a conventional technique as described earlier to operation of a device include use of a control image to operate a device.

However, a control image is directed to an operation that is predetermined by a device manufacturer or a system integrator. Thus, the control image is not configured to, in order for an administrator, a field operator, or the like of a device and a system in a factory (hereinafter referred to as a "user") to monitor the device as desired, (i) acquire information on states of various monitoring targets in the device or (ii) rewrite the information as desired. This causes a problem of failure to cause the device to carry out an action such as reading information desired by the user, or writing the information as desired.

An aspect of the present invention has an object to cause a device to execute a desired action with respect to information desired by a user.

### Solution to Problem

In order to attain the object, a communication terminal in accordance with a first aspect of the present invention includes: a terminal side communication section configured to communicate with a device that possesses a target to be accessed and access information acquired by accessing the target;
a setting section configured to set, for at least one transmission means that is used to carry out transmission by communication carried out by a program for exchanging messages, (i) specifying information for specifying the target and (ii) an action that the device is caused to execute with respect to the access information, the specifying information and the action being set by an operation of a user so as to be associated with each other; and
an execution control section configured to cause the terminal side communication section to send the at least one transmission means to the device, and cause the device to execute, with respect to the access information on the target that is specified by the specifying information having been set for the at least one transmission means, the action having been set for the at least one transmission means.

### Advantageous Effects of Invention

An aspect of the present invention makes it possible to cause a device to execute a desired action with respect to information desired by a user.

### Brief Description of Drawings

Fig. 1 is a diagram describing an example configuration of a communication system in accordance with Embodiment 1 of the present invention.
Fig. 2 is a block diagram illustrating a configuration of the communication system.
Fig. 3 is a block diagram illustrating a configuration mainly of a control system of the communication system.
Fig. 4 is a flowchart showing an example operation to register a transmission means in a communication terminal illustrated in Fig. 2.
Fig. 5 is a flowchart showing an example operation to acquire information in the communication terminal.
Fig. 6 is a flowchart showing an example operation of a programmable display device illustrated in Fig. 2.
Fig. 7 is a diagram describing an example operation for establishing a specific connection state between the communication terminal and the programmable display device in the communication system.
Fig. 8 is a diagram illustrating an example of a management
table of a device which management table is created in the communication terminal.
Fig. 9 is a diagram describing an example operation to specify a specific object between the communication terminal and the programmable display device in the communication system.
Fig. 10 is a diagram describing a specific example of a setting operation carried out by a setting section of the communication terminal.
Fig. 11 is a diagram describing a specific example of a reading operation carried out in the communication terminal.
Fig. 12 is a diagram illustrating an example of a management
table of the transmission means which management table is created in the communication terminal.
Fig. 13 is a diagram describing a specific example of a writing operation carried out in the communication terminal.
Fig. 14 is a diagram describing a specific example of a notification operation carried out in the communication terminal.
Fig. 15 is a diagram describing an example configuration of a communication system in accordance with Embodiment 2 of the present invention.

### Description of Embodiments

### Embodiment 1

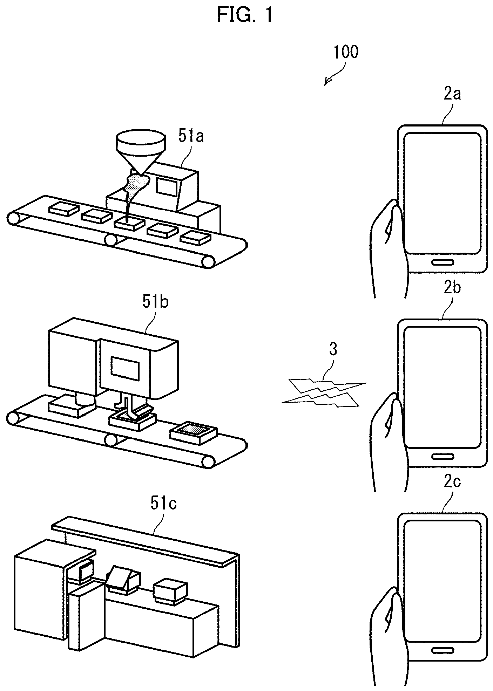

The following description will specifically discuss an embodiment of the present invention with reference to Figs. 1 to 13. Note that the following description will discuss an embodiment of the present invention by illustrating a communication system 100 that is applied to a production line of a factory. Note, however, that the communication system 100 of Embodiment 1 is not limited to this and is not limited to any particular communication system provided that the communication system 100 (i) has a communication terminal 2 and a programmable display device 1 and (ii) is provided with a device capable of communicating with the communication terminal 2.

### <Configuration of communication system 100>

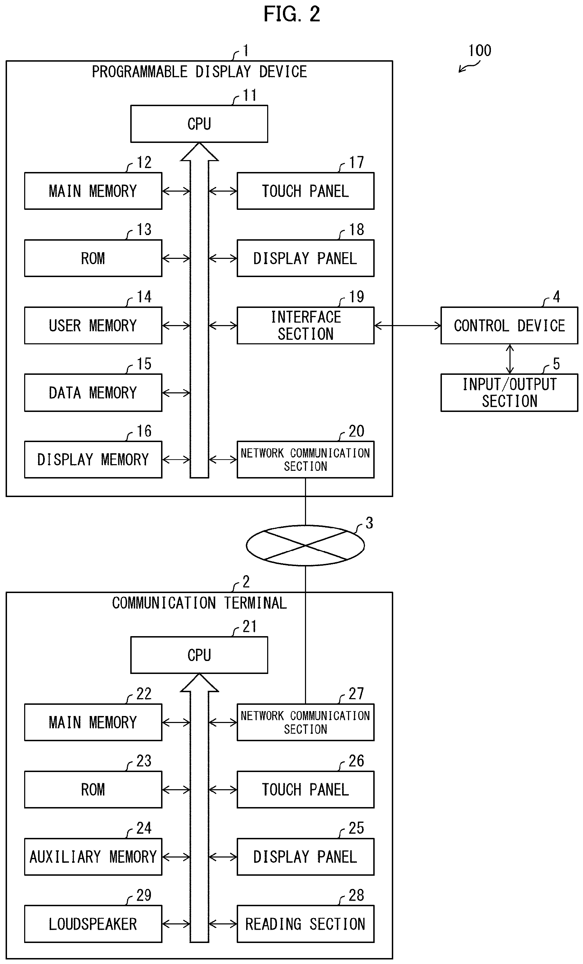

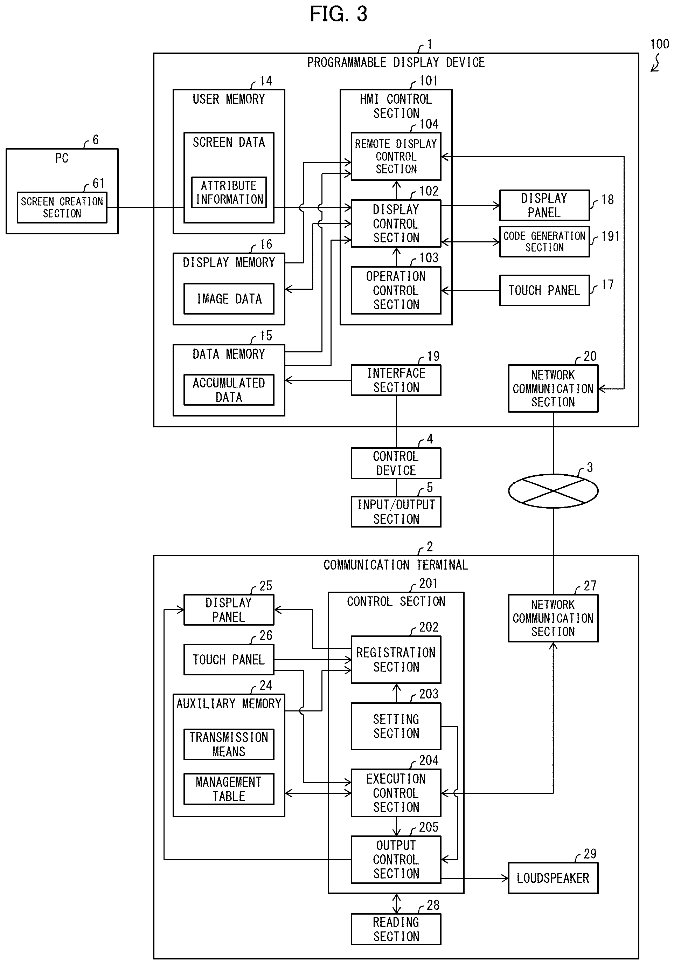

Fig. 1 is a diagram describing an example configuration of the communication system 100 in accordance with Embodiment 1 of the present invention. Fig. 2 is a block diagram illustrating a configuration of the communication system 100. Fig. 3 is a block diagram illustrating a configuration mainly of a control system of the communication system 100.

As illustrated in Fig. 1, the communication system 100 includes, for example, a stirring device 51a, a printing device 51b, and a packaging device 51c as devices of the production line. The communication system 100 includes a plurality of, for example, three communication terminals 2a, 2b, and 2c (hereinafter, collectively referred to as "2" as appropriate) and a local area network (LAN) 3 serving as a network. The programmable display device 1 (Fig. 2) is mounted on each of the stirring device 51a, the printing device 51b, and the packaging device 51c. In the communication system 100, data communication between the communication terminal 2 and each of the stirring device 51a, the printing device 51b, and the packaging device 51c is substantially carried out between the communication terminal 2 and the programmable display device 1 mounted on a corresponding device.

Specifically, in the communication system 100, three programmable display devices 1 and three communication terminals 2 are connected to the LAN 3 via, for example, a LAN cable (not illustrated) or a wireless LAN router (not illustrated). That is, the three programmable display devices 1 and the three communication terminals 2 are configured to be capable of interactively communicating with each other with the LAN 3 therebetween.

The programmable display device 1 is a special purpose machine with a dedicated operating system (OS) embedded therein, and has the function of executing human machine interface (HMI) programs for carrying out various functions of the programmable display device 1. The programmable display device 1 is a dedicated computer that has improved dust resistance, improved drip proofness, improved vibration resistance, and the like so as to withstand a harsh environment such as a factory.

The communication terminal 2 is a terminal that from a remote place with respect to the programmable display device 1, monitors and operates the programmable display device 1 and the device in which the programmable display device 1 is incorporated. The communication terminal 2 causes the programmable display device 1 to execute a predetermined action (specifically described later). As illustrated in Fig. 1, the communication terminal 2 is suitably a portable device such as a smartphone or a tablet, but may be a stationary device such as a desktop personal computer.

### <Hardware configuration of programmable display device 1>

As illustrated in Fig. 2, the programmable display device 1 includes a central processing unit (CPU) 11, a main memory 12, a read only memory (ROM) 13, a user memory 14, a data memory 15, a display memory 16, a touch panel 17, a display panel 18, and an interface section 19, and a network communication section 20.

The CPU 11 is a processing device that executes an HMI program for carrying out an HMI function of the programmable display device 1. Specifically, in order to execute the HMI program, the CPU 11 receives data from the main memory 12, the user memory 14, the data memory 15, the display memory 16, the touch panel 17, and/or the like. The CPU 11 also supplies, to the main memory 12, the user memory 14, the display panel 18, and/or the like, results of computation or processing carried out with respect to the data.

The main memory 12 is a memory that constitutes a main storage of the programmable display device 1, and is constituted by a dynamic random access memory (DRAM).

The ROM 13 stores therein programs essential for operation of the programmable display device 1, such as a basic input output system (BIOS) that is executed during starting or resetting of the programmable display device 1.

As illustrated in Fig. 3, the user memory 14 is a mass storage that stores data prepared by a user, e.g., screen data for displaying an HMI screen (described later), and is constituted by a flash erasable and programmable ROM (FEPROM). The FEPROM is a rewritable read-only flash memory and serves as a hard disk drive in a common personal computer. A flash memory, which has no movable part and is highly resistant to shock, can stably operate even in a poor ambient environment. The screen data also includes attribute information of an HMI screen and attribute information of an object (described later) contained in the HMI screen.

The data memory 15 is a memory for storing various pieces of data displayed in the programmable display device 1 and in the communication terminal 2. Examples of the data stored in the data memory 15 include alarm data, logging data (sampling data), and trend data each of which has been acquired from a control device 4, and recipe data acquired from, for example, a host system and to be provided to the control device 4. The data memory 15 accumulates such various pieces of data as accumulated data. The accumulated data is data in binary or text format, such as character data or numeric data.

The display memory 16 is a video RAM (VRAM) in which a display control section 102 (described later) loads, on a pixel-by-pixel basis, image data constituting a screen displayed the display panel 18. In a case where the display memory 16 is not required to operate at a high speed, the main memory 12 may be partially provided with a region that replaces the display memory 16.

The touch panel 17 is disposed on the display panel 18. The touch panel 17 receives a touch operation carried out with respect to a screen displayed on the display panel 18, and outputs a touch operation signal as an input signal.

The display panel 18 is a device side display section configured to display information. The display panel 18 displays, for example, (i) the HMI screen based on the screen data stored in the user memory 14 and (ii) an identification code (described later). The display panel 18 is a flat display panel such as a liquid crystal display panel or an organic electro-luminescent (EL) display panel.

The interface section 19 is a connection section for communicable connection with the control device 4. The interface section 19 is equipped with various interfaces such as a serial interface and a local area network (LAN).

The network communication section 20 is a device side communication section configured to communicate with the communication terminal 2. The network communication section 20 has the function of network communication carried out via the LAN 3.

The control device 4 and an input/output section 5 are each mounted on each of the stirring device 51a, the printing device 51b, and the packaging device 51c. The control device 4 is a device such as a programmable logic controller (PLC), a temperature controller, or an inverter, and has the function of communicating with the programmable display device 1. The control device 4 exchanges data with the input/output section 5. The input/output section 5 has a functional section for carrying out, in correspondence with each of the devices (described earlier), the function of a corresponding device. Specifically, for example, the printing device 51b is provided with a printing section as the functional section. The printing section includes, for example, a conveyor for conveying a printing medium, and an ink cartridge for use in printing on a printing medium. Examples of the input/output section 5 include input devices such as a sensor and a switch, and output devices such as an actuator, a relay, a solenoid valve, and an indicator.

The control device 4 includes a device memory (not illustrated). The device memory stores data (word data and/or bit data) indicative of a state of the input/output section 5 (an output value from the input/output section 5 and/or a setting value for the input/output section 5) in a region specified by a device address. Information stored in this device memory contains access information. The access information is information that is acquired by the communication terminal 2 by accessing an object serving as a target to be accessed by the communication terminal 2. The region specified by the device address is part of a device that possesses the access information. The device address is an example of specifying information for specifying the target to be accessed by the communication terminal 2.

In addition to the configuration described above, for example, the data memory 15 of the programmable display device 1 may be configured to store the information stored in the device memory. An address that specifies a region in which the information stored in the device memory is stored in the data memory 15 is also treated as the device address.

### <Hardware configuration of communication terminal 2>

The communication terminal 2 is a communication device on which a dedicated operating system (OS) is mounted. As described below, the communication terminal 2 has an environment in which an application program is executed.

As illustrated in Fig. 2, the communication terminal 2 includes a central processing unit (CPU) 21, a random access memory (RAM) 22, a read only memory (ROM) 23, an auxiliary memory 24, a display panel 25 (output section), a touch panel 26, a network communication section 27, a reading section 28, and a loudspeaker 29 (output section). The communication terminal 2 further includes a microphone (not illustrated) for a voice input.

The CPU 21 is a processing device that executes a system program of the communication terminal 2. Specifically, in order to execute the system program, the CPU 21 receives data from the auxiliary memory 24, the touch panel 26, and/or the like, and supplies, to the auxiliary memory 24, the display panel 25, and/or the like, results of computation or processing carried out with respect to the data.

The ROM 23 stores therein not only the system program but also programs essential for operation of the communication terminal 2, such as a basic input output system (BIOS) that is executed during starting or resetting of the communication terminal 2.

The auxiliary memory 24 is provided for storing various pieces of data, programs, and the like each of which should be retained by the communication terminal 2. The auxiliary memory 24 is constituted by, for example, a flash memory. The auxiliary memory 24 stores therein an application program such as a chat application. The chat application is an application program for exchanging messages with a communication partner, and is downloaded in advance and retained in the auxiliary memory 24 in accordance with an operation of the user. In the chat application, a stamp, for example is prepared as a transmission means for transmission to the communication partner, i.e., the programmable display device 1.

The display panel 25 is a terminal side display section configured to display information. The display panel 25 is provided so as to display, for example, (i) a screen for carrying out a basic operation of the communication terminal 2, or (ii) a screen that is displayed as a result of execution of the application program. The display panel 25 is a flat display panel such as a liquid crystal display panel or an organic EL display panel.

The touch panel 26 constitutes an operation receiving section configured to receive an operation of the user, and is an input device disposed on the display panel 25. The touch panel 26 receives a touch operation carried out with respect to a screen displayed on the display panel 25, and outputs a touch operation signal as an input signal. Note that the operation receiving section may be an operation member such as a button.

The network communication section 27 is a terminal side communication section configured to communicate with the programmable display device 1. The network communication section 27 has the function of network communication carried out via the LAN 3.

The reading section 28 includes, for example, an image capturing device and/or a scanning device, and reads information displayed on the display panel 18 of the programmable display device 1. Specifically, the reading section 28 reads a code into which specifying information displayed on the display panel 18 has been converted, and restores the code to the specifying information.

### <System configuration of programmable display device 1>

As illustrated in Fig. 3, the programmable display device 1 includes an HMI control section (device side control section) 101 as a section that has a control function.

The HMI control section 101, which is a section that has the HMI function, is realized by the CPU 11 executing the HMI program.

As used herein, the term "HMI function" refers to the function that includes (i) generation of an instruction to the control device 4 in accordance with an input operation of the user, (ii) acquisition of various pieces of data from the control device 4, and (iii) display of the HMI screen for displaying the acquired various pieces of data and receiving the input operation. The HMI control section 101 includes, as the HMI function, (i) a display control section 102 that controls display of an HMI image and (ii) an operation control section 103 that controls sections in accordance with (a) a user's operation input and (b) a change in data retained by the control device 4. The HMI control section 101 also includes a remote display control section 104 that controls display of the communication terminal 2.

The HMI screen is a screen (image) that contains various objects for (i) showing a state of the input/output section 5 that is connected to the control device 4 and (ii) receiving an operation carried out with respect to the touch panel 17. Examples of an object that is prepared so as to be provided on the HMI screen include images of various components such as a lamp component, a numerical indicator component, and a switch component. The state of the input/output section 5 is reflected as a display state of these component images. The screen data for displaying such an HMI screen is created by the user with use of a screen creation section 61 (screen creation program) provided in a personal computer (PC) 6, and the screen data is stored in the user memory 14.

Information (screen data) of the HMI screen and at least one object displayed on the HMI screen are examples of a target to be accessed, and the HMI screen is also to be accessed. In addition, the object has, as attribute information, various pieces of information for carrying out various functions of the object, such as display and operation. Examples of the specifying information included in the attribute information include a device address and a variable for specifying an object for which the access information is to be acquired. The variable, which is a unique designation associated with the device address, is set by the user.

As illustrated in Fig. 3, the attribute information such as the device address and/or the variable is retained, in the user memory 14, as information contained in the screen data. Between the programmable display device 1 and the control device 4, at least one of the device address and the variable is used to specify the target. The HMI screen is given, for example, a screen number as the specifying information.

The display control section 102 carries out a control process for displaying the HMI screen on the display panel 18 in accordance with the screen data. The display control section 102 carries out a process for (i) reading the information (address information) stored in the region (described earlier) that is specified by the specifying information, which is the device address and/or the variable, and (ii) reflecting the information on the HMI screen. For example, the display control section 102 carries out, on the HMI screen, a process for turning on and off the lamp component (described earlier) in accordance with the information or causing the numerical indicator component (described earlier) to display a numerical value in accordance with the information.

The display control section 102 also carries out a process for changing a state of the HMI screen in accordance with the input operation of the user. The display control section 102 carries out a process for, for example, changing a display state (color, shape, etc.) of the switch component (described earlier) by writing, in response to the input operation of the user to operate the switch component, information of the region specified by the specifying information. The display control section 102 also carries out a process for switching the HMI screen in response to the input operation of the user and in accordance with a unique screen number (specifying information) given to the HMI screen.

Process details for carrying out the processes as described earlier are set for the components. The display control section 102 interprets the process details set for the components and carries out the processes.

The display control section 102 also functions as a conversion section configured to convert, into an image such as a bitmap image, at least part of the HMI screen that can be displayed on the display panel 18. That is, the display control section 102 converts the whole or part of the HMI screen into the image in accordance with pixel data loaded in the display memory 16. The display control section 102 may convert, into the image, an object as part of the HMI screen.

In the programmable display device 1, a code converted from the specifying information is displayed in a predetermined display form. Specifically, the programmable display device 1 includes a code generation section 191 configured to convert the specifying information into an identification code (e.g., QR code (Registered Trademark)). The code generation section 191 also converts, into the identification code (e.g., QR code (Registered Trademark)), an IP address, which is unique information of the programmable display device 1 incorporated in the device.

Then, in response to a touch input operation carried out by the user with respect to the touch panel 17 or an instruction from the communication terminal 2, the display control section 102 causes the display panel 18 to display the identification code generated by the code generation section 191.

The operation control section 103 generates an operation instruction that is in accordance with the touch input operation carried out by the user with respect to the touch panel 17. Examples of the operation instruction include an instruction to start/stop the control device 4, an instruction to change control data that is given to the control device 4, and an instruction to switch screens. The operation control section 103 also generates a control instruction that is in accordance with a change in data in the control device 4. Examples of the control instruction include an instruction to switch screens.

The remote display control section 104 controls the network communication section 20 so as to transmit, to the communication terminal 2, the image data retained in the display memory 16. More specifically, the remote display control section 104 causes the network communication section 20 to transmit, for example, (i) information read by the display control section 102 and/or (ii) an image such as the bitmap image (described earlier).

### <System configuration of communication terminal 2>

As illustrated in Fig. 3, the communication terminal 2 includes a control section 201 as a section having a control function. The control section 201 controls communication with the programmable display device 1 and controls display of a screen in accordance with the access information acquired from the programmable display device 1. In order to carry out such control functions, the control section 201 includes a registration section 202, a setting section 203, an execution control section 204, and an output control section 205.

The registration section 202 registers the device in a predetermined chat application. In other words, the registration section 202 registers a communication target device in the chat application in a case where the communication terminal 2 uses the chat application to communicate with the programmable display device 1 and a device on which the programmable display device 1 is mounted. Specifically, into the auxiliary memory 24, the registration section 202 writes, as data generated by executing the chat application, a management table (described later) including an IP address of the programmable display device which IP address specifies the device. The registration section 202 also writes, into the auxiliary memory 24, a transmission means set by the setting section 203 and registers the transmission means in the auxiliary memory 24.

The setting section 203 sets, for the transmission means that is used to carry out transmission by the chat application, (i) specifying information for specifying the target and (ii) an action that the device is caused to execute with respect to access information that the user desires to access. The setting section 203 sets the specifying information and the action by the operation of the user so that the specifying information and the action are associated with each other. The setting section 203 also acquires the specifying information restored by the reading section 28. Specific examples of the transmission means include a character input, speech, and a stamp (described earlier) each of which is used in the chat application. Examples of the action include a reading operation, a writing operation (setting operation), and a notification operation each of which is carried out with respect to the access information.

In a case where reading of the access information is set as the action for the transmission means, the setting section 203 sets an output form in which the access information to be read is output. The setting section 203 further sets the output form by the operation of the user so that the output form is associated with the transmission means. The output form may be a display output by the display panel 25 or a voice output by the loudspeaker 29. Examples of a form in which the display output is carried out include a form in which the access information is incorporated in character information, a form in which an image such as a bitmap image is displayed, and a form in which a hexadecimal numerical value is displayed.

In accordance with the operation of the user, the execution control section 204 causes the network communication section 27 to send, to the communication target device, the transmission means registered in the auxiliary memory 24. With the configuration, the execution control section 204 causes the communication target device to execute, with respect to the access information, set for the transmission means, on a target specified by the specifying information, the action set for the transmission means. That is, by using the chat application to send the transmission means to the communication target device (programmable display device 1), the execution control section 204 causes the communication target device to execute the action set for the transmission means.

The target specified by the specifying information is specifically described here. First, the specifying information contains, for example, a screen number, a screen ID, or a screen name of the HMI screen, and the HMI screen is to be specified by the specifying information. The access information that is acquired in a case where the specified HMI screen is accessed is, for example, the whole or part of the HMI screen. The specifying information also contains, for example, a component number, a component ID, or a component name of a component serving as the object, and the component is to be specified by the specifying information.

The specifying information also contains, for example, an information name, a variable name, a device name, or a device address. A memory region in which numerical information is stored is to be specified by the specifying information. The information name will be specifically described later.

An action that the execution control section 204 causes the device to execute with respect to the access information include reading of an image obtained by capturing the entire HMI screen, reading of an image obtained by cutting a part of the HMI screen, and reading of an image of a component that can be specified by, for example, a component name of an object. The action also includes reading, writing, or notification of, for example, numerical information that is retained by a component (object) that can be specified by, for example, a component name of the object. The action further includes reading, writing, or notification of, for example, numerical information that is included in a numerical group retained in an object and that is specified by, for example, an information name.

For example, the numerical information and/or numerical group is/are retained as attribute information in the user memory 14 of the programmable display device 1. In a case where the numerical information is a single piece of numerical information, the single piece of numerical information can be specified by the specifying information such as the component number, the component ID, or the component name. In a case where the numerical information is a numerical group including two or more pieces of numerical information, the numerical group can be specified by not only the specifying information such as the component number, the component ID, or the component name but also the specifying information such as the information name, the variable, or the device address.

In other words, in a case where a numerical indicator that indicates only one numerical value is specified as, for example, "component name: numerical indicator 1", it is possible to determine corresponding numerical information. In this case, it is possible to omit specification of the numerical information. In contrast, in the case of, for example, a temperature controller component that has a numerical group including a plurality of pieces of numerical information, it is unclear whether "component name: temperature controller 1 " alone specifies a PV value or an SV value. Thus, in this case, for example, "information names" for uniquely expressing information of the "PV value" and the "SV value", such as "temperature controller 1. PV value" and "temperature controller 1. SV value" can be used to determine the numerical information by specifying the numerical information as a combination of a component name and an information name. Furthermore, in this case, for example, a combination of a component name and a variable name, or a combination of a component name and a device address also makes it possible to determine the numerical information.

The output control section 205 functions as an output control section configured to carry out a process for controlling the display panel 25 serving as an output section configured to output (display) information in the form of an image. The output control section 205 causes the display panel 25 to display, for example, an execution screen that is generated in a case where the chat application is executed. The output control section 205 also causes a touch operation that has been carried out on a screen displayed on the display panel 25 and has been detected by the touch panel 26 to be reflected in the screen as necessary. The output control section 205 also controls the loudspeaker 29 that outputs information in the form of voice, and causes the loudspeaker 29 to output speech information by voice.

### <Example operation of communication terminal 2>

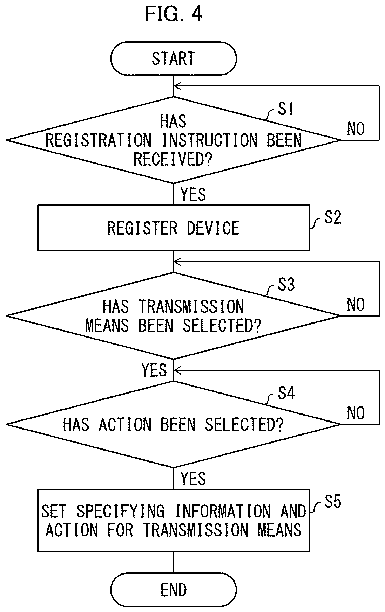

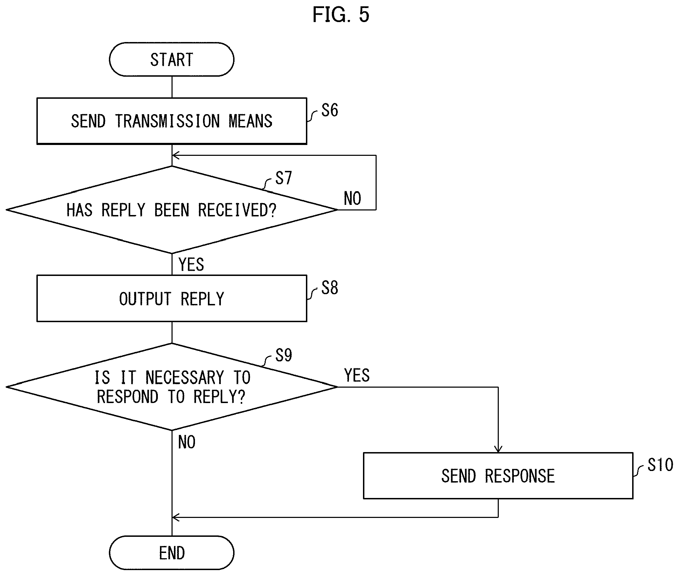

Fig. 4 is a flowchart showing an example operation to register a transmission means in the communication terminal 2 illustrated in Fig. 2. Fig. 5 is a flowchart showing an example operation to acquire information in the communication terminal.

As shown in a step S1 in Fig. 4, in the communication terminal 2, the control section 201 determines whether the touch panel 26 has received a registration instruction to register a communication target device with respect to a chat application. The control section 201 which determines that the touch panel 26 has not received the registration instruction (NO in the step S1) is in a standby state.

In contrast, in a case where the control section 201 determines that the touch panel 26 has received the registration instruction (YES in the step S1), the registration section 202 registers the communication target device in the chat application as specifically described later (a step S2).

Next, the control section 201 determines whether the touch panel 26 has received a selection of a transmission means for the communication target device (a step S3). The control section 201 which determines that the touch panel 26 has not received the selection of the transmission means (NO in the step S3) is in a standby state.

In contrast, the control section 201 which determines that the touch panel 26 has received the selection of the transmission means (YES in the step S3) determines whether the touch panel 26 has received a selection of an action with respect to the communication target device (a step S4). The control section 201 which determines that the touch panel 26 has not received the selection of the action (NO in the step S4) is in a standby state. Note that the steps S3 and S4 do not necessarily need to be carried out in this order and may be interchanged.

In contrast, in a case where the control section 201 determines that the touch panel 26 has received the selection of the action (YES in the step S4), the setting section 203 sets specifying information and the action for the transmission means so that the specifying information and the action are associated with each other, as specifically described later (a step S5). The specifying information is acquired in advance by a certain method (specifically described later). As shown in the above steps S1 to S5, the operation to register the transmission means is carried out in the communication terminal 2.

Next, the communication terminal 2 carries out an operation, illustrated in Fig. 5, to acquire information. Once the operation, illustrated in Fig. 4, to register the transmission means is carried out, the communication terminal 2 can acquire information many times by carrying out the operation to acquire information. Specifically, the control section 201 causes the network communication section 27 to send the transmission means to the communication target device (programmable display device 1), as shown in a step S6 in Fig. 5.

Subsequently, the control section 201 determines whether the network communication section 27 has received, from the communication target device (programmable display device 1), a reply to an action set for the transmission means (a step S7). The control section 201 which determines that the network communication section 27 has received no reply (NO in the step S7) is in a standby state.

In contrast, in a case where the control section 201 determines that the network communication section 27 has received the reply (YES in the step S7), the output control section 205 outputs and displays access information contained in the received reply (a step S8).

Specifically, in a case where a display output is set as the output form for the transmission means, the output control section 205 causes the display panel 25 to display the access information. In other words, in this case, the reading operation with respect to the access information is associated, as the action, with the transmission means sent in the step S6, and the communication terminal 2 causes the display panel 25 to display the access information acquired from the communication target device. This allows the user to understand the access information desired by the user (specifically described later). In a case where a voice output is set as the output form for the transmission means, the output control section 205 causes the loudspeaker 29 to output the access information in the form of voice.

Next, the control section 201 determines whether it is necessary to respond to the received reply (a step S9). The response is, for example, a response from the user to inquiry information for inquiring about a condition (e.g., a setting value) that is satisfied by the access information for carrying out notification having been set for the transmission means. The control section 201 which determines that it is unnecessary to respond to the received reply (NO in the step S9) ends the process.

In contrast, the control section 201 which determines that it is necessary to respond to the received reply (YES in the step S9) causes the output control section 205 to cause the display panel 25 to execute a display that promotes the user to carry out an input regarding the response. Thus, for example, the display panel 25 displays a message that promotes a setting value, which is the condition, to be input as the inquiry information. Thereafter, the control section 201 which acquires a response from the user causes the network communication section 27 to send the acquired response to the communication target device (a step S10). For example, a setting value, which is the condition, is sent as the response from the user.

In other words, in this case, the writing operation or the notification operation with respect to the access information is associated as the action with the transmission means sent in the step S6. Thus, the communication terminal 2 causes the display panel 25 to display the message corresponding to, for example, the inquiry information contained in the reply received from the communication target device, acquires a response from the user, and carries out the operation in the step S10. This allows the communication target device to be instructed of the response and to carry out, in the communication target device, an operation (action) based on the instructed response (specifically described later).

### <Example operation of programmable display device 1>

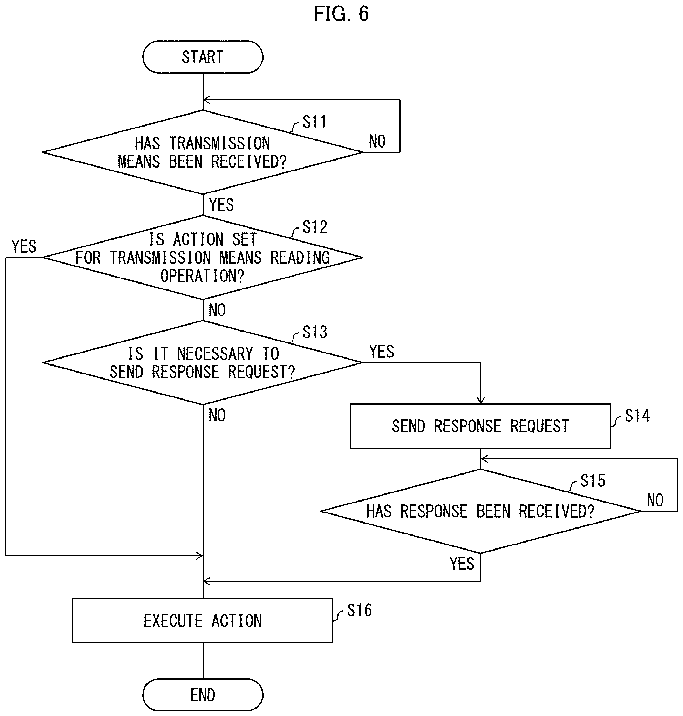

Fig. 6 is a flowchart showing an example operation of the programmable display device 1 illustrated in Fig. 2.

In the programmable display device 1, unless the touch panel 17 receives an instruction to display the identification code, the HMI control section 101 is in a standby state.

In contrast, in a case where the touch panel 17 receives the instruction to display the identification code, the HMI control section 101 causes the code generation section 191 to generate an identification code and causes the display control section 102 to display the identification code on the display panel 18.

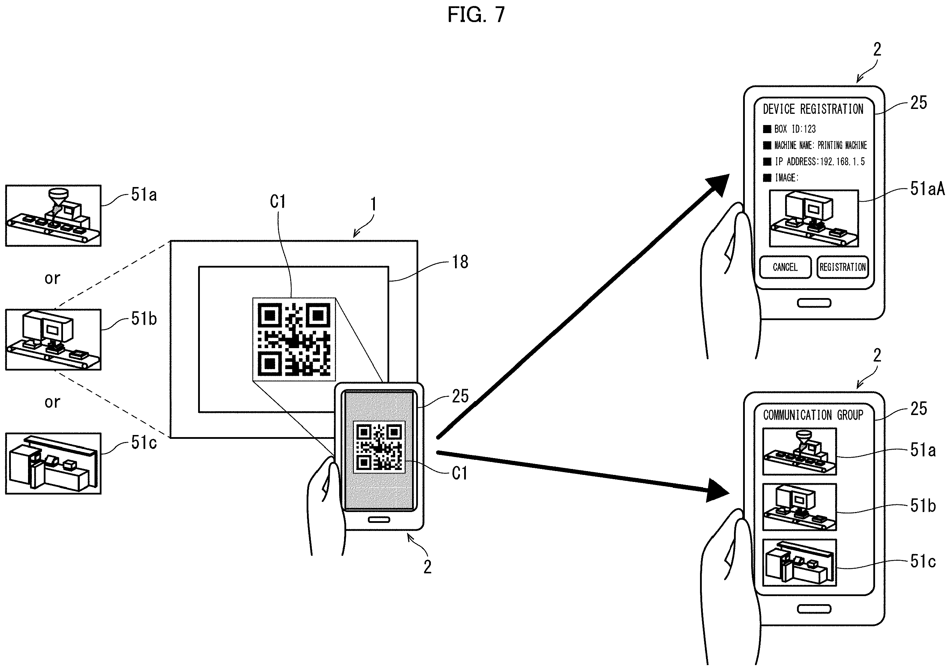

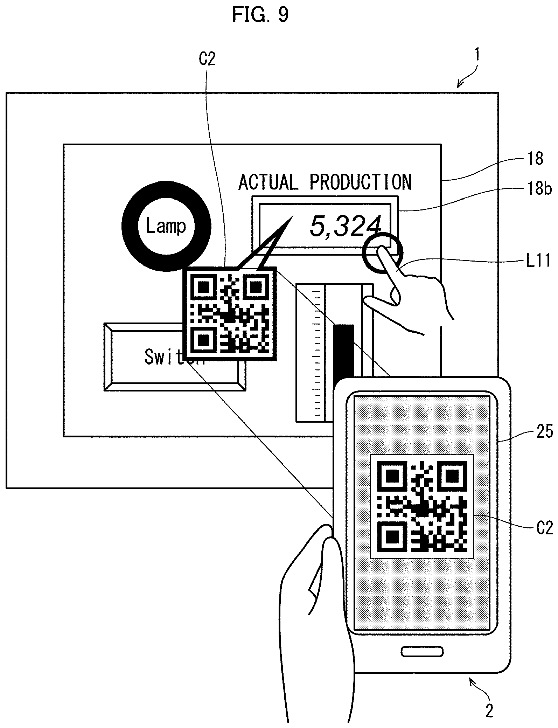

As described later, the identification code corresponds to each of (i) a case where a connection state between the communication terminal 2 and the device (programmable display device 1) is established (illustrated later in Fig. 7) and (ii) a case where the access information desired by the user is specified (illustrated later in Fig. 9). In a case where the identification code is not used to establish the connection state or specify the access information, the HMI control section 101 does not cause the code generation section 191 to generate the identification code.

As shown in a step S11 in Fig. 6, the HMI control section 101 determines whether the network communication section 20 has received the transmission means from the communication terminal 2. The HMI control section 101 which determines that the network communication section 20 has not received the transmission means (NO in the step S11) is in a standby state.

In contrast, the HMI control section 101 which determines that the network communication section 20 has received the transmission means (YES in the step S11) determines whether an action set for the transmission means is the reading operation (a step S12). The HMI control section 101 which determines that the action set for the transmission means is not the reading operation (NO in the step S12) determines whether it is necessary to send a response request to the communication terminal 2 (a step S13).

Subsequently, the HMI control section 101 which determines that it is necessary to send the response request (YES in the step S13) causes the network communication section 20 to send the response request to the communication terminal 2 (a step S14).

Next, the HMI control section 101 determines whether the network communication section 20 has received, from the communication terminal 2, a response to the response request (a step S15). The HMI control section 101 which determines that the network communication section 20 has not received the response (NO in the step S15) is in a standby state.

In contrast, the HMI control section 101 which determines that the network communication section 20 has received the response (YES in the step S15) causes each section of the HMI control section 101 to carry out an operation corresponding to the received response (a step S16). In other words, in a case where the writing operation or the notification operation with respect to the access information is set as the action from the communication terminal 2, the HMI control section 101 causes each section of the HMI control section 101 to use data contained in the received response to carry out the writing operation or the notification operation. In a case where the notification operation with respect to the access information is set as the action from the communication terminal 2 and the access information satisfies the condition described earlier (e.g., a setting value), the HMI control section 101 causes each section of the HMI control section 101 to carry out the notification operation.

The HMI control section 101 which determines that the action of the transmission means having been received in the step S11 is the reading operation (YES in the step S12) causes the reading operation to be executed as the action in the step S16.

The HMI control section 101 which determines in the step S13 that it is unnecessary to transmit the response request to the communication terminal 2 (NO in the step S13) causes the action of the transmission means which action has been received in the step S13 to be executed. In other words, the HMI control section 101 which receives, as the action from the communication terminal 2, data in the writing operation or the notification operation with respect to the access information uses the received data to carry out the writing operation or the notification operation.

### <Example registration operation of device (programmable display device 1) in communication terminal 2>

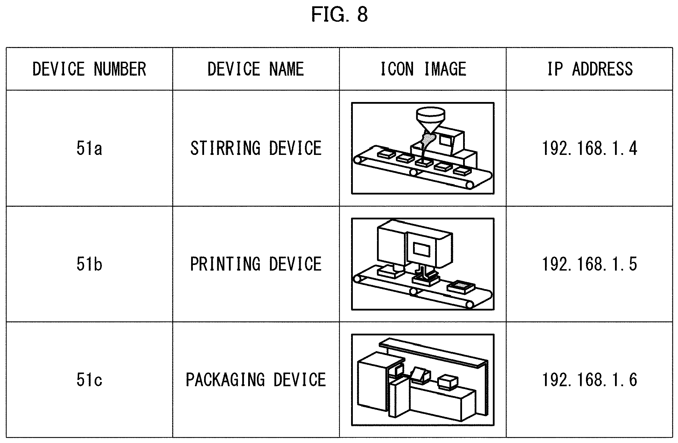

Next, Figs. 7 and 8 will also be used to specifically describe example registration operations shown in the steps S1, S2, S11, and S12. Fig. 7 is a diagram describing an example operation for establishing a specific connection state between the communication terminal 2 and the programmable display device 1 in the communication system 100. Fig. 8 is a diagram illustrating an example of a management table of a device which management table is created in the communication terminal 2.

In Fig. 7, the programmable display device 1 displays an identification code C1 of the device in a case where the operations in the steps S11 and S12 are carried out and the user carries out a predetermined operation. Specifically, the code generation section 191 creates the identification code C1 including the IP address of the programmable display device 1 mounted on the stirring device 51a, the printing device 51b, or the packaging device 51c, and the display control section 102 causes the display panel 18 to display the identification code C1.

Thereafter, in a case where the user reads the identification code C1 via the reading section 28 such that the identification code C1 is displayed on the display panel 25, the communication terminal 2 acquires the IP address restored from the identification code by the reading section 28. The communication terminal 2 establishes the connection state with the programmable display device 1 in accordance with the IP address. This enables mutual communication between the communication terminal 2 and the programmable display device 1. The registration section 202 registers a communication target device in accordance with the acquired IP address. With this, in the communication terminal 2, the communication target device is registered, and the output control section 205 causes the display panel 25 to display an icon 51aA of the communication target device. Furthermore, in the communication terminal 2, the stirring device 51a, the printing device 51b, and the packaging device 51c are displayed, as a communication group of communication target devices, on the display panel 25.

As illustrated in Fig. 8, in the communication terminal 2, a management table of registered devices each of which is capable of communicating with the communication terminal 2 is created and retained in the auxiliary memory 24. As illustrated in Fig. 8, a device number, a device name, an icon image, and an IP address (of a corresponding programmable display device 1) are managed in the management table.

In the communication system 100 of Embodiment 1, a registration operation with use of the identification code C1 is carried out. With this, without the need to search for a device on the LAN 3 or input a separately obtained IP address, ID number, or device name, the user can register a device that communicates with the communication terminal 2. In other words, the communication system 100 of Embodiment 1 makes it possible to reduce complicatedness of the input operation and a human error in the input operation. This makes it possible to set a device that is capable of easily communicating with the communication terminal 2.

### <Example setting operation with respect to transmission means in communication terminal 2>

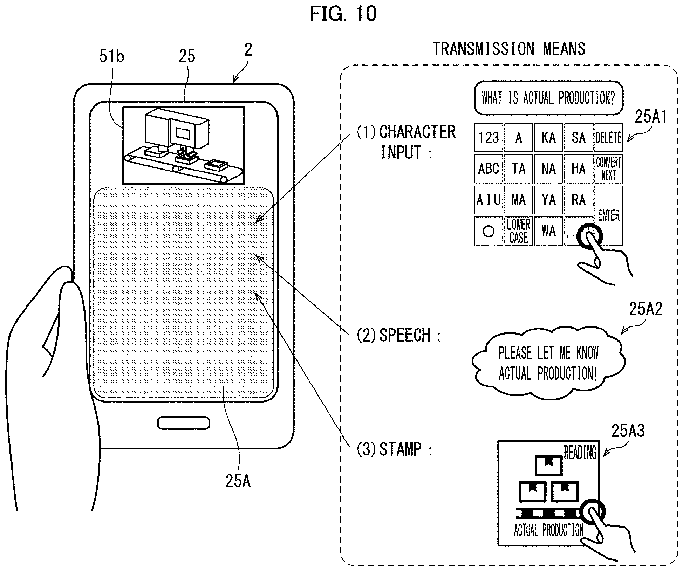

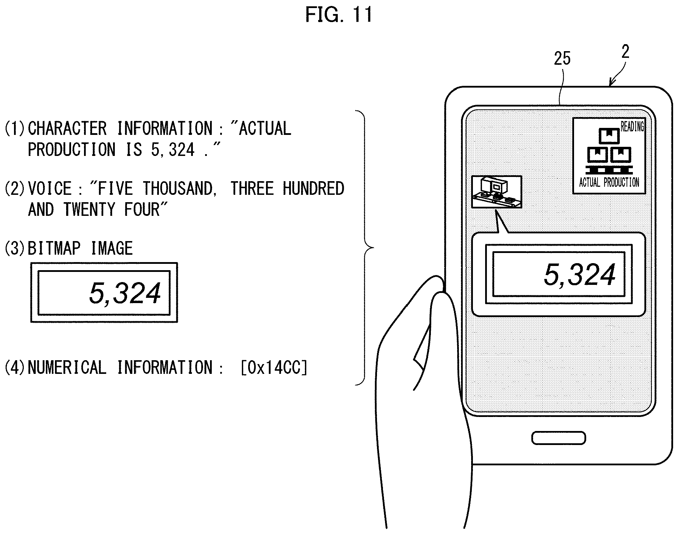

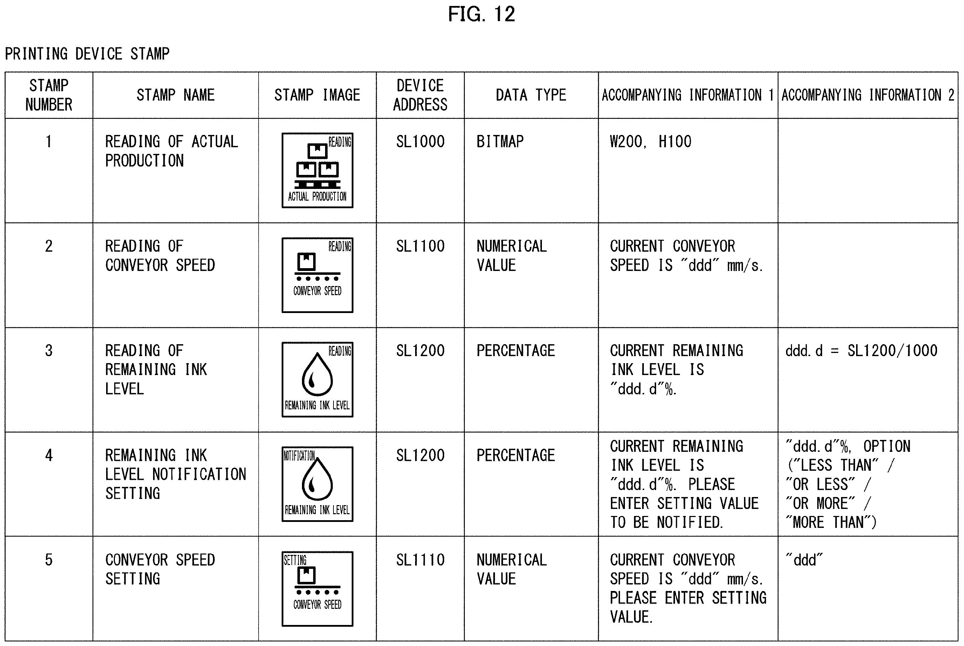

Next, Figs. 9 to 12 will also be used to specifically describe example setting operations, shown in the steps S3 to S5 and S11 to S16, with respect to the transmission means. Fig. 9 is a diagram describing an example operation to specify a specific object between the communication terminal 2 and the programmable display device 1 in the communication system 100. Fig. 10 is a diagram describing a specific example of a setting operation carried out by the setting section 203 of the communication terminal 2. Fig. 11 is a diagram describing a specific example of the reading operation carried out in the communication terminal 2. Fig. 12 is a diagram illustrating an example of a management table of the transmission means which management table is created in the communication terminal 2.

For example, as illustrated in Fig. 9, it is assumed in the programmable display device 1 that the HMI screen containing an object 18b (numerical indicator component) indicative of actual production is displayed on the display panel 18. In this case, the touch panel 17 detects, for example, that a predetermined operation such as a long tap has been carried out with a finger L11 of the user with respect to the object 18b. This causes the code generation section 191 to create an identification code C2 containing specifying information of the object 18b, and causes the display control section 102 to display the identification code C2 on the display panel 18.

Next, in a case where the user reads the identification code C2 via the reading section 28 such that the identification code C2 is displayed on the display panel 25, the communication terminal 2 causes the reading section 28 to convert the identification code C2 into information containing the specifying information. The setting section 203 determines that the information acquired from the reading section 28 is the specifying information of the object 18b.

Thereafter, in the communication terminal 2, the output control section 205 receives an instruction from the setting section 203 and causes the display panel 25 to display an icon 51bA of the printing device 51b, which is the communication target device. Furthermore, in the communication terminal 2, a display for selecting a character input, speech, or a stamp as the transmission means is carried out as illustrated in (1) to (3) of Fig. 10.

Next, in a case where the touch panel 26 detects selection of the transmission means and the character input is selected as the transmission means, the output control section 205 causes a display 25A1 containing a keyboard and an input display column to be displayed, and promotes an input of a character string to be set. In a case where the speech is selected as the transmission means, the output control section 205 causes a message (not illustrated) that promotes the user to speak to be displayed. In a case where the user inputs voice via a microphone in accordance with the message, the setting section 203 converts the voice into a character. The output control section 205 displays, as in a display 25A2, a character string into which the voice has been converted.

In a case where the stamp is selected as the transmission means, the output control section 205 causes a display 25A3 for selecting one of a plurality of stamps prepared in advance to be displayed. The display 25A3 illustrated in Fig. 10 indicates a state in which one (1) stamp has been selected by the user. The setting section 203 temporarily stores, in the auxiliary memory 24 (or the main memory 22), the transmission means thus selected.

In a case where the touch panel 26 detects selection of, for example, the reading operation, the setting section 203 sets the specifying information, the reading operation serving as the action, and the output form so that the specifying information, the reading operation, and the output form are associated with each other. The specifying information specifies, for the selected transmission means, the object 18b that displays actual production information as the access information. The specifying information may be, for example, a device address in the device memory that stores the actual production information. Thereafter, the communication terminal 2 causes the network communication section 27 to send the set transmission means to the programmable display device 1 of the printing device 51b.

Next, in the programmable display device 1 of the printing device 51b, the HMI control section 101 carries out the operation in the step S14 so as to recognize that the action set for the received transmission means is the reading operation with respect to the actual production information. This causes the HMI control section 101 to read the actual production information in accordance with the specifying information (device address) associated with the transmission means. Then, in the programmable display device 1 of the printing device 51b, the HMI control section 101 sends, to the communication terminal 2, the actual production information that has been read by the network communication section 20.

Thereafter, the communication terminal 2 which has received the actual production information from the programmable display device 1 of the printing device 51b uses the selected transmission means to notify the user of the actual production information as illustrated in Fig. 11. Specifically, the read actual production information is output and passed to the user by any one of character information, voice, an image such as a bitmap image, and numerical information as the output form set for the transmission means as shown in each of (1) to (4) of Fig. 11. As illustrated in Fig. 11, the image of the object 18b which image has been sent from the programmable display device 1 so as to correspond to the specifying information for specifying the object 18b is displayed on the display panel 25 of the communication terminal 2 in a case where the image is displayed as the output form.

In the communication terminal 2, in a case where the setting section 203 sets the transmission means, a management table that manages the transmission means is created and retained in the auxiliary memory 24 for each device. Specifically, as illustrated in Fig. 12, a management table that manages a stamp number, a stamp name, a stamp image, a device address, a data type, accompanying information 1, and accompanying information 2 is created as a management table of the transmission means for the printing device 51b.

The accompanying information 1 contains, for example, a sentence example that indicates the read access information. The accompanying information 2 contains a numerical transformation formula for percentage indication, information as to whether a condition under which notification that is carried out in the form of an alarm is carried out includes a setting value, and information such as the number of digits of the setting value. For example, in a case where the address information is a numerical value, the alarm is a monitoring target to be monitored via an object, and is an action that gives a notification that a numerical value reflected in the object has reached a range indicating an anomaly.

### <Example writing operation and example notification operation in communication terminal 2>

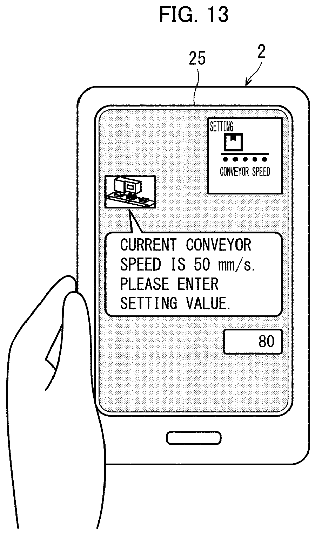

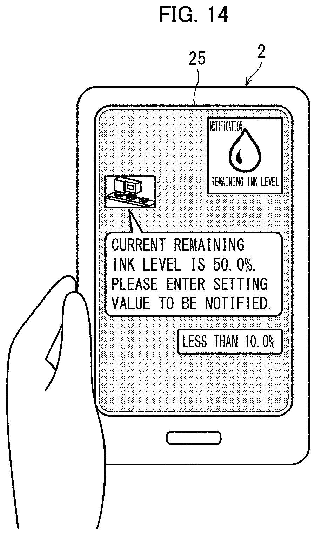

Next, Figs. 13 and 14 will also be used to specifically describe an example writing operation and an example notification operation in the communication terminal 2. Fig. 13 is a diagram describing a specific example of the writing operation carried out in the communication terminal 2. Fig. 14 is a diagram describing a specific example of the notification operation carried out in the communication terminal 2.

The display panel 25 of the communication terminal 2 displays a history illustrated in Fig. 13. Specifically, the history is a history of (i) a setting (writing) stamp as the transmission means, (ii) a reply to access information from the printing device 51b (communication target device), and (iii) the writing operation (action) that the printing device 51b is caused to execute with respect to the access information.

In other words, the display panel 25 displays a stamp image in which the specifying information (device address) for specifying an object for acquiring a conveyor speed and the writing operation are associated with each other. The display panel 25 also displays (i) an information display that shows a response request to the writing operation from the programmable display device 1 and (ii) a setting value that has been input by the user in response to the information display.

The display panel 25 of the communication terminal 2 also displays a history illustrated in Fig. 14. Specifically, the history is a history of (i) a notification stamp as the transmission means, (ii) a reply to access information from the printing device 51b (communication target device), and (iii) a condition under which the printing device 51b is caused to carry out notification with respect to the access information.

In other words, the display panel 25 displays a stamp image in which the specifying information (device address) for specifying an object for acquiring a remaining ink level and the notification operation are associated with each other. The display panel 25 also displays (i) an information display that shows a response request to the notification operation from the programmable display device 1 and (ii) a setting value that has been set by the user in response to the information display.

As described above, according to the communication system 100 of Embodiment 1, in a case where the communication terminal 2 executes, with respect to a device (the programmable display device 1), an action desired by a user, the specifying information and the action are associated with each other by an operation of the user so as to be set for a transmission means in a chat application. Furthermore, the communication terminal 2 causes the network communication section (terminal side communication section) 27 to send the transmission means to the device, and causes the device to execute, with respect to the access information on a target specified by the specifying information, the action set for the transmission means. With this, Embodiment 1 makes it possible to configure the communication terminal 2 that allows an action desired by a user for access information to be freely executed in accordance with selection by the user.

According to the communication system 100 of Embodiment 1, in a case where the communication terminal 2 sends a transmission means to a device (the programmable display device 1), the device can execute an action set for the transmission means. This makes it possible to reduce data traffic during remote control of the device by the communication terminal 2. As a result, Embodiment 1 makes it possible to reduce communication loads on the communication terminal 2 and the programmable display device 1, respectively. Moreover, according to Embodiment 1, the LAN 3 having a low communication speed can be used to construct the communication system 100. This makes it possible to easily reduce cost of the communication system 100.

According to the communication terminal 2 of Embodiment 1, the reading section 28 reads an identification code which is displayed on the display panel 18 of the programmable display device 1 and into which the specifying information has been converted, and restores the identification code to the specifying information. According to the communication terminal 2 of Embodiment 1, the setting section 203 acquires the specifying information restored by the reading section 28. This makes it possible to easily acquire the specifying information.

According to the programmable display device 1 of Embodiment 1, the code generation section 191 converts the specifying information into the identification code, and the identification code is displayed on the display panel 18. This allows the communication terminal 2 to easily acquire the specifying information.

Further, according to the programmable display device 1 of Embodiment 1, the code generation section 191 converts the specifying information to the identification code without changing existing screen data of an HMI screen. The specifying information is information that specifies a target for acquiring access information such as an object contained in the HMI screen, and/or the HMI screen per se. With this, Embodiment 1 makes it possible to construct a remote communication system with the communication terminal 2 without changing the existing screen data of the HMI screen.

### Embodiment 2

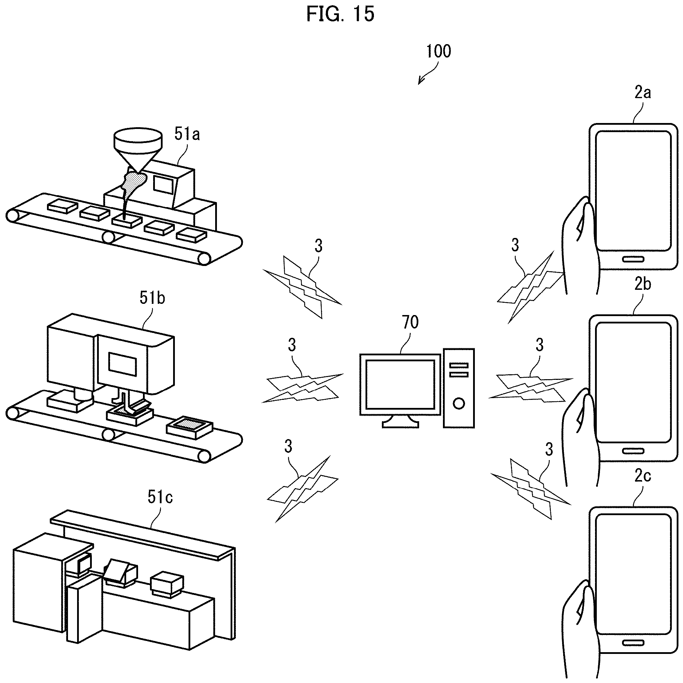

The following description will specifically discuss Embodiment 2 of the present invention. Fig. 15 is a diagram describing an example configuration of a communication system 100 in accordance with Embodiment 2 of the present invention. Note that for convenience, members having functions identical to those of the respective members described in Embodiment 1 are given respective identical reference numerals, and a description of those members is omitted.

Embodiment 2 differs from Embodiment 1 mainly in that a server 70 is provided in LANs 3.

In other words, as illustrated in Fig. 15, the communication system 100 of Embodiment 2 includes the server 70 that is placed on the LANs 3. In the server 70, for example, the management table illustrated in Fig. 8 or the management table illustrated in Fig. 12 is created and retained for each of communication terminals 2a to 2c.

With the configuration, the communication system 100 of Embodiment 2 brings about an effect similar to that brought about by the communication system 100 of Embodiment 1. Furthermore, the communication system 100 of Embodiment 2 collectively manages information for communication between a plurality of communication terminals 2 and a plurality of devices (programmable display devices 1). This makes it possible to easily enhance convenience of the communication system 100. Moreover, in the communication system 100 of Embodiment 2, the server 70 manages the transmission means and the management table (device registration information) that are managed by the auxiliary memory 24 of the communication terminal 2 in the communication system 100 of Embodiment 1.

### [Software Implementation Example]

The HMI control section 101 of the programmable display device 1 and the control section 201 of the communication terminal 2 are realized by a program with use of the respective CPUs 11 and 21. The respective CPUs 11 and 21 of the programmable display device 1 and the communication terminal 2 read the program from a storage medium in which the program is stored, and execute the program, so that the object of the present invention is attained. Examples of the storage medium encompass "a non-transitory tangible medium" such as a tape, a disk, a card, a semiconductor memory, and a programmable logic circuit. The program can be supplied to or made available to a computer via any transmission medium (such as a communication network or a broadcast wave) which allows the program to be transmitted. Note that an aspect of the present invention can also be achieved in the form of a computer data signal in which the program is embodied via electronic transmission and which is embedded in a carrier wave.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
A communication terminal in accordance with a first aspect of the present invention includes: a terminal side communication section configured to communicate with a device that possesses a target to be accessed and access information acquired by accessing the target;
a setting section configured to set, for at least one transmission means that is used to carry out transmission by communication carried out by a program for exchanging messages, (i) specifying information for specifying the target and (ii) an action that the device is caused to execute with respect to the access information, the specifying information and the action being set by an operation of a user so as to be associated with each other; and
an execution control section configured to cause the terminal side communication section to send the at least one transmission means to the device, and cause the device to execute, with respect to the access information on the target that is specified by the specifying information having been set for the at least one transmission means, the action having been set for the at least one transmission means.

According to the configuration, in order to access the access information that specifies the target in the device, the communication terminal associates the specifying information with the action by the operation of the user so as to set the specifying information and the action for the transmission means in a program such as a chat application. In a case where the communication terminal sends the transmission means to the device, the device executes, with respect to the access information on the target specified by the specifying information, the action set for the transmission means. With this, in accordance with the specifying information and the action that have been set for the transmission means by the user, the device can be caused to execute, with respect to the access information desired by the user, the action desired by the user.

In a second aspect of the present invention, a communication terminal can be configured, in the first aspect of the present invention, to further include a reading section configured to read a code which is displayed in a predetermined display form in a device side display section of the device and into which the specifying information has been converted, and restore the code to the specifying information, the setting section acquiring the specifying information having been restored by the reading section.

According to the configuration, in the communication terminal, the setting section acquires the specifying information having been restored by the reading section. This makes it possible to easily acquire the specifying information.

A programmable display device in accordance with a third aspect of the present invention is a programmable display device that is incorporated in the device, the programmable display device including: a device side communication section configured to communicate with the communication terminal of the second aspect of the present invention; and a code generation section configured to convert the specifying information into the code; and the device side display section configured to display the code into which the specifying information has been converted by the code generation section.

According to the configuration, the programmable display device causes the device side display section to display the code with respect to the communication terminal. This allows the communication terminal to easily acquire the specifying information.

In a fourth aspect of the present invention, a communication terminal can be configured, in the first aspect or the second aspect of the present invention, to further include: an output section configured to output information; and an output control section configured to control the output section, in a case where reading of the access information is set as the action for the at least one transmission means, the setting section further setting an output form in which the access information to be read is output by the output section, the output form being set by the operation of the user so as to be associated with the at least one transmission means, in a case where the execution control section causes the device to execute reading of the access information as the action, the terminal side communication section receiving the access information that has been read in the output form having been set for the at least one transmission means and has been sent from the device, and the output control section causing the output section to output, in accordance with the output form, the access information having been received by the terminal side communication section.

According to the configuration, the communication terminal reads the access information from the device and causes the output section to output the access information in the set output form. With this, the user can easily understand desired access information in a desired form such as display or voice.

In a fifth aspect of the present invention, a communication terminal can be configured such that, in the fourth aspect of the present invention, the output section is a terminal side display section configured to display information, the output form is an image based on at least part of a screen that is capable of being displayed in the device, and the output control section causes the terminal side display section to display the image.

According to the configuration, the communication terminal can display, in the terminal side display section, an image that has been read from the device. With this, the user can easily visually recognize, as an image, a state of an image that is displayed in the device.

A programmable display device in accordance with a sixth aspect of the present invention is a programmable display device that is incorporated in the device, the programmable display device including: a device side communication section configured to communicate with the communication terminal of the fifth aspect of the present invention; and a device side display section configured to display the screen; and a conversion section configured to convert, into the image, an object contained in the screen that is capable of being displayed in the device side display section, the device side communication section sending, to the communication terminal, the image into which the object has been converted by the conversion section.

According to the configuration, the conversion section of the programmable display device converts, into the image, the object in the screen displayed in the device side display section, and the device side communication section sends the image to the communication terminal. This allows the communication terminal to display, in the terminal side display section, an image that has been sent from the device. Thus, the user can easily visually recognize, as an image, an object that is particularly notable in an image.

In a seventh aspect of the present invention, a communication terminal can be configured, in any one of the first, second, and fourth aspects of the present invention, to further include a registration section configured to register the set at least one transmission means, the at least one transmission means comprising a plurality of transmission means, the action being notification to the communication terminal concerning the access information, in a case where one of the plurality of transmission means having been registered by the registration section is selected, the execution control section causing the terminal side communication section to send the selected transmission means to the device, and causing the device to (i) send inquiry information for inquiring about a condition that is satisfied by the access information for carrying out the notification having been set for the selected transmission means, (ii) set the condition that has been returned to the device in response to the inquiry information, and (iii) notify the device that the access information has satisfied the condition.

According to the configuration, even in a case where a plurality of devices are present, the user can easily carry out notification of desired access information with respect to a selected device. Thus, the user can easily receive the notification of the desired access information on a device to be monitored.

A programmable display device in accordance with an eighth aspect of the present invention is a programmable display device that is incorporated in the device, the programmable display device including: a device side communication section configured to communicate with the communication terminal of the seventh aspect of the present invention; and a device side control section, in a case where the device side communication section receives the transmission means, the device side control section causing the device side communication section to (i) send the inquiry information on the transmission means to the communication terminal, (ii) set the condition that has been returned from the communication terminal, and (iii) notify the communication terminal that the access information has satisfied the condition.

According to the configuration, even in a case where a plurality of devices are present, the user can easily carry out notification of desired access information with respect to a selected device. Thus, the user can easily receive the notification of the desired access information on a device to be monitored.

### Reference Signs List

1 Programmable display device
2 Communication terminal
18 Display panel (device side display section)
20 Network communication section (device side communication section)
25 Display panel (output section, terminal side display section)
27 Network communication section (terminal side communication section)
28 Reading section
29 Loudspeaker (output section)
101 HMI control section (device side control section)
102 Display control section (conversion section)
191 Code generation section
201 Control section
202 Registration section
203 Setting section
204 Execution control section
205 Output control section
51a Stirring device
51b Printing device
51c Packaging device

## Claims

1. A communication terminal comprising:
a terminal side communication section configured to communicate with a device that possesses a target to be accessed and access information acquired by accessing the target;
a setting section configured to set, for at least one transmission means that is used to carry out transmission by communication carried out by a program for exchanging messages, (i) specifying information for specifying the target and (ii) an action that the device is caused to execute with respect to the access information, the specifying information and the action being set by an operation of a user so as to be associated with each other; and
an execution control section configured to cause the terminal side communication section to send the at least one transmission means to the device, and cause the device to execute, with respect to the access information on the target that is specified by the specifying information having been set for the at least one transmission means, the action having been set for the at least one transmission means.

2. A communication terminal as set forth in claim 1, further comprising a reading section configured to read a code which is displayed in a predetermined display form in a device side display section of the device and into which the specifying information has been converted, and restore the code to the specifying information,
the setting section acquiring the specifying information having been restored by the reading section.

3. A programmable display device that is incorporated in the device,
said programmable display device comprising:
a device side communication section configured to communicate with the communication terminal recited in claim 2;
a code generation section configured to convert the specifying information into the code; and
the device side display section configured to display the code into which the specifying information has been converted by the code generation section.

4. A communication terminal as set forth in claim 1 or 2, further comprising:
an output section configured to output information; and
an output control section configured to control the output section,
in a case where reading of the access information is set as the action for the at least one transmission means, the setting section further setting an output form in which the access information to be read is output by the output section, the output form being set by the operation of the user so as to be associated with the at least one transmission means,
in a case where the execution control section causes the device to execute reading of the access information as the action, the terminal side communication section receiving the access information that has been read in the output form having been set for the at least one transmission means and has been sent from the device, and
the output control section causing the output section to output, in accordance with the output form, the access information having been received by the terminal side communication section.

5. The communication terminal as set forth in claim 4, wherein
the output section is a terminal side display section configured to display information,
the output form is an image based on at least part of a screen that is capable of being displayed in the device, and
the output control section causes the terminal side display section to display the image.

6. A programmable display device that is incorporated in the device,
said programmable display device comprising:
a device side communication section configured to communicate with the communication terminal recited in claim 5;
a device side display section configured to display the screen; and
a conversion section configured to convert, into the image, an object contained in the screen that is capable of being displayed in the device side display section,
the device side communication section sending, to the communication terminal, the image into which the object has been converted by the conversion section.

7. A communication terminal as set forth in any one of claims 1, 2, and 4, further comprising a registration section configured to register the set at least one transmission means, the at least one transmission means comprising a plurality of transmission means,
the action being notification to the communication terminal concerning the access information,
in a case where one of the plurality of transmission means having been registered by the registration section is selected, the execution control section causing the terminal side communication section to send the selected transmission means to the device, and causing the device to (i) send inquiry information for inquiring about a condition that is satisfied by the access information for carrying out the notification having been set for the selected transmission means, (ii) set the condition that has been returned to the device in response to the inquiry information, and (iii) notify the device that the access information has satisfied the condition.

8. A programmable display device that is incorporated in the device,
said programmable display device comprising:
a device side communication section configured to communicate with the communication terminal recited in claim 7; and
a device side control section,
in a case where the device side communication section receives the transmission means, the device side control section causing the device side communication section to (i) send the inquiry information on the transmission means to the communication terminal, (ii) set the condition that has been returned from the communication terminal, and (iii) notify the communication terminal that the access information has satisfied the condition.
